# EUROPEAN PATENT APPLICATION

(11) **EP 4 206 026 A1**
(43) Date of publication of application: **05.07.2023**
(21) Application number: 22862520.8
(22) Date of filing: 26.01.2022
(51) Int. Cl.: B60L 53/00, B60L 3/00, G06Q 10/06, G01C 21/00, G08G 1/0969

(54) **VEHICLE CHARGING METHOD AND APPARATUS, AND VEHICLE**

(30) Priority: 06.09.2021 CN 202111038351
(71) Applicant: PATEO CONNECT+ Technology (Shanghai) Corporation, Shanghai 201821 (CN)
(72) Inventor: SHI, Hongren, Shanghai 201821 (CN); ZHANG, Chuxiong, Shanghai 201821 (CN)
(74) Representative: Ziebig Hengelhaupt Intellectual Property Attorneys Patentanwaltsanwaltskanzlei PartGmbB
(86) International application number: PCT/CN2022/073986
(87) International publication number: WO 2023/029369

(57) **Abstract**

A vehicle charging method includes obtaining overall trip information of a vehicle, the overall trip information including at least one trip segment, assigning a charging strategy to each trip segment, and according to the trip segment and a corresponding charging mode, performing a charging service on the vehicle during a trip of the vehicle. In response to existence of a driving trip segment, a driving charging mode is assigned corresponding to the driving trip segment. In response to existence of a parking trip segment, a stationary charging mode is assigned corresponding to the parking trip segment.

## Description

### CROSS-REFERENCE TO RELATED APPLICATION

This application claims priority to Chinese Patent Application No. 202111038351.8, filed on September 6, 2021, the entire contents of both of which are incorporated herein by reference.

### TECHNICAL FIELD

The present disclosure relates to the electric vehicle technology field and, more particularly, to a vehicle charging method, device, and vehicle.

### BACKGROUND

With the development of the electric vehicle industry, demanding for electric vehicles is increasing. Due to a constraint of the battery technology, electric vehicles often need to be charged frequently, and each charge can take a long time. Thus, users often need to have a charging plan in advance, which causes poor user experience and limits further promotion of electric vehicles.

Often, a user can upload information such as a starting point and an endpoint of a trip and remaining electric power of an electric vehicle to a remote server before the trip. The remote server plans a best driving route and a best charging place for parking and charging for the user according to information, charging pile information along the trip, and traffic information uploaded by the user. However, although the charging plan is automatically planned in this solution, travel time is increased for the user.

### SUMMARY

Embodiments of the present disclosure provide a vehicle charging method. The method includes obtaining overall trip information of a vehicle, the overall trip information including at least one trip segment, assigning a charging strategy to each trip segment, and according to the trip segment and a corresponding charging mode, performing a charging service on the vehicle during a trip of the vehicle. In response to existence of a driving trip segment, a driving charging mode is assigned corresponding to the driving trip segment. In response to existence of a parking trip segment, a stationary charging mode is assigned corresponding to the parking trip segment.

Embodiments of the present disclosure provide a vehicle charging device, including an acquisition module, a calculation module, and a charging module. The acquisition module is configured to obtain overall trip information of a vehicle. The overall trip information includes at least one trip segment. The calculation module is configured to assign a charging strategy to each trip segment. In response to existence of a trip segment, a driving charging mode is assigned corresponding to the trip segment. In response to existence of a stationary trip segment, a stationary charging mode is assigned corresponding to the stationary trip segment. The charging module is configured to obtain current remaining electric power of the vehicle, obtain a distance of the trip segment in the driving trip segment and estimate estimated remaining electric power when the driving trip segment ends according to the current remaining electric power of the vehicle, obtain a distance of a next trip segment in the stationary trip segment and estimate estimated remaining electric power when the next driving trip ends according to the current remaining electric power of the vehicle, and determine to provide a charging service according to a corresponding charging mode in the current trip segment.

Embodiments of the present disclosure provide a vehicle, including a vehicle charging device. The vehicle charging device includes an acquisition module, a calculation module, and a charging module. The acquisition module is configured to obtain overall trip information of a vehicle. The overall trip information includes at least one trip segment. The calculation module is configured to assign a charging strategy to each trip segment. In response to existence of a trip segment, a driving charging mode is assigned corresponding to the trip segment. In response to existence of a stationary trip segment, a stationary charging mode is assigned corresponding to the stationary trip segment. The charging module is configured to obtain current remaining electric power of the vehicle, obtain a distance of the trip segment in the driving trip segment and estimate estimated remaining electric power when the driving trip segment ends according to the current remaining electric power of the vehicle, obtain a distance of a next trip segment in the stationary trip segment and estimate estimated remaining electric power when the next driving trip ends according to the current remaining electric power of the vehicle, and determine to provide a charging service according to a corresponding charging mode in the current trip segment.

In embodiments of the present disclosure, the overall trip information can be classified into the stationary trip segment and the driving trip segment. The stationary trip segment can correspond to the stationary charging mode. The driving trip segment can be the driving charging mode. That is, different charging modes can be assigned to different trip segments. In the existing technology, only the driving trip segment is considered, and a parking charging trip segment can be added to the driving trip segment to perform the stationary charging. Compared to this, in embodiments of the present disclosure, the stationary charging mode can be assigned when the parking trip segment exists. The vehicle can be charged during parking, which saves the time of the user. Moreover, the driving trip mode can be assigned to the corresponding driving trip segment. Compared to the existing technology of adding the parking charging trip segment into the driving trip segment, no additional parking charging trip segment is needed, which saves the time of the user.

The above is only an overview of the technical solution of the present disclosure. To better understand the technology of the present disclosure, the technical solution can be implemented according to the content of the specification. To make the above and other purposes, features, and advantages clearer, embodiments of the present disclosure are disclosed.

### BRIEF DESCRIPTION OF THE DRAWINGS

FIG. 1 is a schematic flowchart of a vehicle charging method according to some embodiments of the present disclosure.
FIG. 2 is a schematic structural diagram of a remote server in a vehicle charging method according to some embodiments of the present disclosure.
FIG. 3 is a schematic diagram showing a driving charging mode of a vehicle charging method according to some embodiments of the present disclosure.

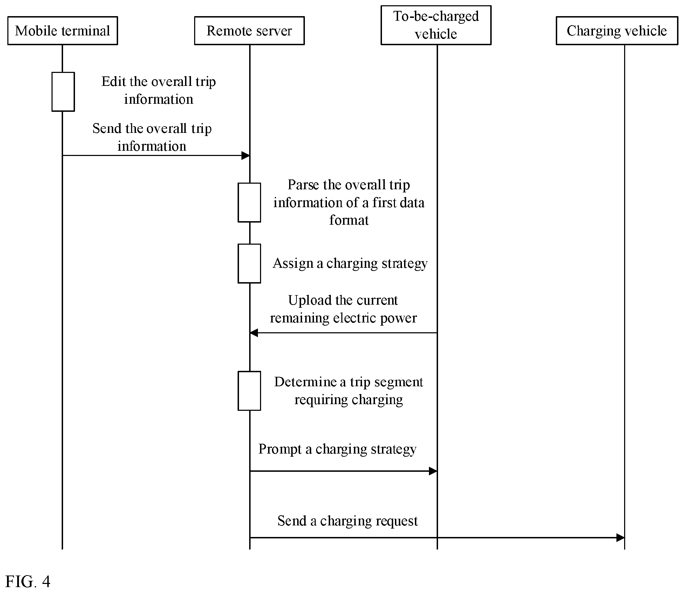

FIG. 4 is a schematic diagram of a terminal interaction of a vehicle charging method according to some embodiments of the present disclosure.
FIG. 5 is a schematic structural block diagram of a vehicle charging device according to some embodiments of the present disclosure.

### DETAILED DESCRIPTION OF EMBODIMENTS

To make the above objects, features, and advantages of the present disclosure more comprehensible, the present disclosure is further described in detail below in connection with the accompanying drawings and specific embodiments.

When a user chooses to travel by driving an electric vehicle, to prevent the power of the electric vehicle from being drained off during the trip to affect the travel plan, the user can upload a starting point and a destination of the trip and the remaining electric power of the electric vehicle to a remote server before the trip. The remote server can be configured to plan a best driving route and a best charging place for the user according to information, charging pile information along the trip, and real-time traffic information uploaded by the user.

However, after the best driving route and the best charging place are planned, the user can still need to drive to a predetermined place according to the plan at an appropriate time for parking and charging. After the charging is complete, the remaining trip can be completed. That is, an additional parking and charging trip can be added to the trip of the user, which wastes the time of the user.

Thus, embodiments of the present disclosure provide a vehicle charging method, a device, and a vehicle to solve the time waste problem in the existing charging method for the user. The vehicle of embodiments of the present disclosure can generally refer to a vehicle driven by a power storage unit (such as a battery), including an electric sedan, an electric SUV, an electric truck, an electric bus, an electric motorcycle, and an electric bicycle.

According to a first aspect of the present disclosure, a vehicle charging method of embodiments of the present disclosure is described in detail first.

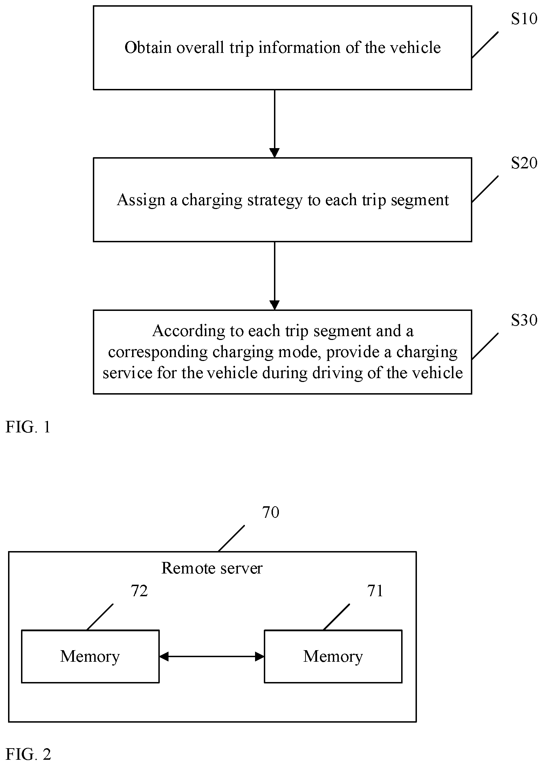

FIG. 1 is a schematic flowchart of a vehicle charging method according to some embodiments of the present disclosure. As shown in FIG. 1, the vehicle charging method includes the following processes.

At S 10, overall trip information of the vehicle is obtained.

The overall trip information can include at least one trip segment.

The overall trip of the vehicle can refer to a collection of all the trips of the vehicle within a certain period of time. For example, a one-day vehicle trip can include:
a. at 8:00, departing from Nanjing to Tianmu Lake;
b. from 10:00 to 12:00, visiting Tianmu Lake;
c. from 12:30 to 14:00, dining at Tianmu Lake Hotel;
d. at 14:00, departing for Youhu Villa; and
e. from 16:00 to 18:00, entertaining in Youhu Villa.

Then, the overall trip information is a collection of five trips, including a, b, c, d, and e. Any one of the above five trips can be a separate trip segment. A trip segment in which the vehicle needs to be driven can be a driving trip segment (e.g., trip segments a and b). A trip segment in which the vehicle does not need to be driven can be a parking segment (e.g., trip segments b, c, and e).

The overall trip information is not limited to the collection of all the trips in one day and can also be a collection of all trips of several hours, half a day, or several days (e.g., a Mid-Autumn Festival holidays), which is not limited in embodiments of the present disclosure.

In some embodiments, an execution body for obtaining overall trip information can be a remote server or a vehicle. When the execution body is the remote server, a structure of the remote server is shown in FIG. 2. The remote server 70 includes a processor 71 and a memory 72. The memory 72 can be used to store a program or an instruction that can be executed by the processor 71. When the program or the instruction is executed by the processor 71, the processor 71 can be configured to realize the processes of obtaining the overall trip information of the vehicle and can achieve a same technology effect, which is not repeated to avoid repetition.

In some embodiments, obtaining the overall trip information of the vehicle can include the following processes.

At S 11, the overall trip information sent by a vehicle-carried terminal or a mobile terminal is received.

The mobile terminal can include a mobile apparatus such as a mobile phone, a tablet computer, a smart wearable device, etc., which can realize a wireless communication connection and has certain text, voice, or image processing capabilities. The vehicle-carried terminal can be a device mounted on the vehicle and has certain text, voice, or image processing capabilities, such as a driving computer.

Exemplarily, the vehicle charging method of embodiments of the present disclosure can be stored in the remote server. The remote server can be communicatively connected to the vehicle-carried terminal or mobile terminal. The user can edit the overall trip information through the vehicle-carried terminal or mobile terminal. For example, the overall trip information can be edited through text input, voice input, text recognition in pictures, etc., and can be uploaded to the remote server after editing. Thus, the user can more conveniently upload the overall trip information of the vehicle. For example, when the overall trip information is sent through the mobile terminal, the user can record the trip through a logging program. With user permission, the user-recorded trip can be read from the logging program through the program interface and can be uploaded.

The vehicle charging method can also be stored in the vehicle. Thus, when the user sends the overall trip information through the mobile terminal, the mobile terminal can be communicatively connected to the vehicle.

In some embodiments, when a first data format of the overall trip information is different from a predetermined second data format, the method further includes the following process.

At S 12, the overall trip information of the first data format is parsed to obtain the overall trip information of the second data format.

In some embodiments, after the user uploads the overall trip information, key information of the overall trip information can be recognized through a predetermined program, e.g., the driving trip segment or the parking trip segment, a starting point and a destination of the driving trip segment, and a sequence between the trip segments. The second data format can be a format that can be directly recognized by any of the key information extracted by the predetermined program. The first data format can be an original format in which the user uploads the overall trip information. The first data format can be converted into the second data format. Thus, the key information of the overall trip information can be recognized.

In some embodiments, the overall trip information uploaded by the user can be voice information. First, voice information can be converted into text information through voice recognition. Then, the text information can be parsed into information of the second data format through semantic parsing. The overall trip information uploaded by the user can also be text information, picture information, video information, etc. The parsing process of the data format is not be repeated here. In addition, if the overall trip information is directly read from another program through the program interface, the data format specified by the another program is different from the format recognizable by the predetermined program. Then, the format of the overall trip information can also need to be converted according to actual needs.

At S20, a charging strategy is assigned to each trip segment.

When a driving trip segment exists, a driving charging mode can be assigned to the corresponding driving trip segment. When a parking trip segment exists, a stationary charging mode can be assigned to the parking trip segment.

The driving charging mode can refer to a charging mode in which the vehicle receives electric energy from the outside during driving to charge the vehicle. For example, a to-be-charged vehicle and a charging vehicle can travel in a same direction and at a same speed, and transmission of electric energy can be realized through a wired connection or wireless connection. In some other embodiments, the vehicle can be charged through a charging facility built on the road during driving. In still some other embodiments, the to-be-charged vehicle can drive into a charging compartment of the charging vehicle.

A stationary charging mode can refer to that after the vehicle is parked, the vehicle is charged through a predetermined charging apparatus such as a charging pile.

At S30, according to each trip segment and a corresponding charging mode, a charging service is provided for the vehicle during driving of the vehicle.

For example, when the vehicle needs to be charged in the stationary charging mode during the parking trip segment, the remote server can reserve a charging pile near the parking trip section in advance to save the user waiting time in line.

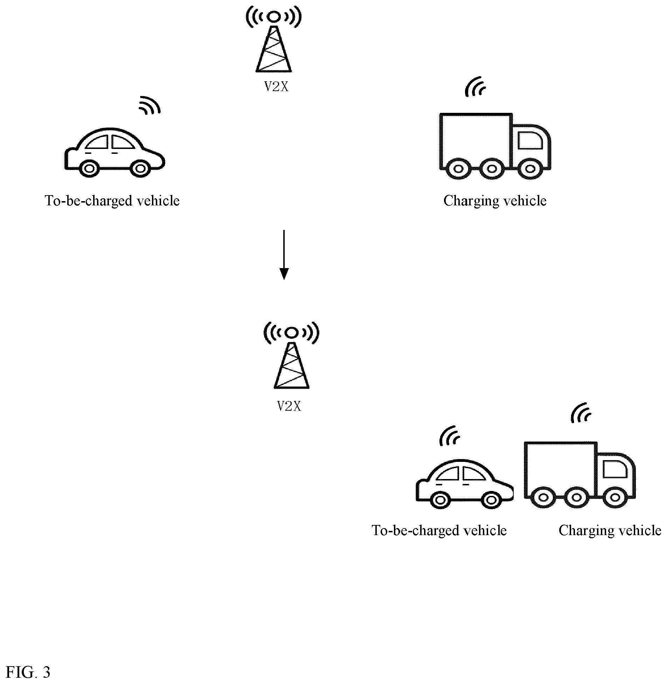

FIG. 3 is a schematic diagram showing a driving charging mode of a vehicle charging method according to some embodiments of the present disclosure. When the vehicle needs to be charged in the driving charging mode, the remote server or the vehicle terminal can send a charging request to the outside. For example, as shown in FIG. 3, the to-be-charged vehicle broadcasts through a V2X base station to request electric vehicles nearby to share electric power. The charging vehicle can determine to share the electric power with the to-be-charged vehicle according to remaining electric power and a remaining trip distance of the charging vehicle. The to-be-charged vehicle can be communicatively connected to the charging vehicle through the V2X base station. The to-be-charged vehicle and the charging vehicle can finish electric power transmission during driving.

In the process of implementing embodiments of the present disclosure, the inventor find that in the process of helping the user plan the charging plan according to the trip information in the existing technology, the plan can only be performed on one driving segment in the overall trip information, and the parking trip segment of the overall trip plan is not considered. That is, in the existing technology, a parking charging trip segment can be added at a certain position in the driving trip segment, and the parking time of the parking trip segment cannot be reasonably utilized. Therefore, in embodiments of the present disclosure, the overall trip information can be classified into the stationary trip segment and the driving trip segment. The stationary trip segment can correspond to the stationary charging mode, and the driving trip segment can correspond to the driving charging mode. That is, according to different trip segments, different charging modes can be assigned. The stationary charging mode can be assigned to the parking trip segment. Thus, the vehicle can be charged during parking, which saves the time of the user. The driving charging mode can be assigned to the driving trip segment. Thus, compared to adding a parking charging trip segment to the driving trip segment in the existing technology, with the driving charging mode, the parking charging trip segment does not need to be added, which saves the time of the user.

In some embodiments, according to each trip segment and the corresponding charging mode, providing the charging service for the vehicle during driving of the vehicle includes the following processes.

At S31, the current remaining electric power of the vehicle is obtained.

In some embodiments, the current remaining electric power of the vehicle can be directly obtained by reading the data of the trip computer or can be obtained through a manual input by the user.

At S32, in the driving trip segment, the distance of the trip segment is obtained, and estimated remaining electric power is estimated when the driving trip segment ends according to the current remaining electric power of the vehicle.

In some embodiments, when the vehicle is located near the starting point, the distance of the trip segment can be calculated from the starting point and end point of the trip segment of the overall trip information. After the vehicle has been driving for a certain period of time, the current position of the vehicle can be obtained through satellite positioning, and according to the current position and the endpoint, the distance of the trip segment can be calculated. After the distance of the driving trip is determined, the estimated electric power consumption of the driving trip segment can be estimated according to the distance of the driving trip segment. Then, the estimated remaining electric power can be obtained according to the current remaining electric power and the estimated electric power consumption.

In practical applications, in addition to the distance of the driving trip segment, the estimated remaining electric power can also be determined in connection with the vehicle speed, traffic jam in the trip, power consumption of vehicle electrical appliances (such as air conditioners, audio, etc.), driving mode. Thus, the estimated remaining electric power can be more accurate.

At S33, in the parking trip segment, the distance of the next trip segment is a driving trip segment, and the estimated remaining electric power is estimated when the next driving trip segment ends according to the current remaining electric power of the vehicle.

When the next trip segment is the driving trip segment, for the acquisition of the distance of the trip segment and the calculation of the estimated remaining electric power, references can be made to process S32, which is not repeated here.

At S34, according to the estimated remaining electric power, the charging service is provided according to the corresponding charging mode in the current trip segment.

According to the estimated remaining electric power, whether charging is required and in which segment of the trip the vehicle needs to be charged can be determined. If the vehicle needs to be charged, the corresponding charging service can be provided according to the trip segment being the driving mode or the parking driving mode. For the method of the charging service, references can be made to process S30, which is not repeated here.

In some embodiments, according to the estimated remaining electric power, the charging service is provided according to the corresponding charging mode in the current trip segment can include, when the current trip segment is the driving trip segment and the next trip segment is the parking trip segment, if the estimated remaining electric power is larger than a first threshold, determining that the stationary charging service is provided in the next trip segment.

The first threshold can be an electric power value greater than zero. Since the charging speed of the stationary charging mode is faster than the charging speed of the driving charging mode, and the stationary charging mode takes advantage of the parking time of the parking trip segment, extra time is not needed. Thus, in practical applications, the first threshold can be selected as small as possible. The charging can be arranged in the parking charging segment as much as possible when the vehicle can be normally used.

In some embodiments, according to the estimated remaining electric power, providing the charging service according to the corresponding charging mode in the current trip segment includes when the current trip segment is a parking trip segment, if the estimated remaining electric power is smaller than a second threshold, determining that the stationary charging service can be provided for the current trip segment.

The second threshold can be an electric power value greater than zero. The charging speed of the stationary charging mode is faster than the charging speed of the driving charging mode. The parking time of the parking trip segment can be used for the stationary charging. No additional cost can be required. Thus, in practical applications, by satisfying the normal user of the vehicle, the second threshold can be selected as large as possible. Thus, the charging can be arranged in the parking trip segment as much as possible.

In some embodiments, the second threshold can be greater than the first threshold.

For example, as shown in Table 1 below, the electric power of the battery is divided into three levels of sufficient power, high power, and low power. The first threshold can be a turning point between high power and low power, and the second threshold can be a turning point between sufficient power and high power.

**Table 1**

| Current trip segment | Next trip segment | Estimated remaining electric power | | | Charging strategy |
|---|---|---|---|---|---|
| | | Sufficient power | high power | Low power | |
| Driving trip segment | Parking trip segment | √ | | | No charging |
| Driving trip segment | Parking trip segment | | √ | | Stationary charging mode |
| Driving trip segment | Parking trip segment | | | √ | driving charging mode |
| Parking trip segment | Driving trip segment | √ | | | No charging |
| Parking trip segment | Driving trip segment | | √ | | Stationary charging mode |
| Parking trip segment | Driving trip segment | | | √ | Stationary charging mode |

In some embodiments, when the charging strategy is charging is required, the charging strategy can be prompted. The charging strategy of charging being required can include at least one of a driving charging mode and a stationary charging mode.

In some embodiments, when the charging strategy is the charging being required, the user can be prompted with the charging strategy by forwarding the voice information, text information, and video information to the user through the terminal carried by the vehicle and mobile terminal. The user can be reminded to charge the vehicle at the appropriate time to prevent the user from forgetting to charge.

According to the second aspect of the present disclosure, a vehicle charging device of embodiments of the present disclosure will be described in detail.

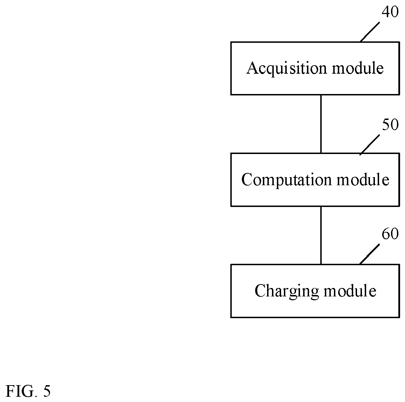

FIG. 5 is a schematic structural block diagram of a vehicle charging device according to some embodiments of the present disclosure. As shown in FIG. 5, the vehicle charging module includes an acquisition module 40, a computation module 50, and a charging module 60.

The acquisition module 40 can be configured to obtain the overall trip information of the vehicle. The overall trip information can include at least one trip segment.

The computation module 50 can be configured to assign a charging strategy to each trip segment, when the driving trip segment exists, assigning the driving charging mode corresponding to the driving trip segment, and when the stationary trip segment exists, assigning the stationary charging mode corresponding to the stationary trip segment.

The charging module 60 can be configured to obtain the current remaining electric power of the vehicle, in the driving trip segment, obtain the distance of the trip segment, and estimate the estimated remaining electric power when the driving trip segment ends according to the current remaining electric power of the vehicle, in the parking trip segment, obtain the distance of the next trip segment, and estimate the estimated remaining electric power when the next driving trip segment ends according to the current remaining electric power of the vehicle, and determine to provide the charging service according to the corresponding charging mode in the current trip segment.

In embodiments of the present disclosure, the overall trip information can be classified into the stationary trip segment and the driving trip segment. The stationary trip segment can correspond to the stationary charging mode, and the driving trip segment can correspond to the driving charging mode. That is, according to the different trip segments, different charging modes can be assigned. In the existing technology, only the driving trip segment is considered, and the parking charging trip segment can be added to the driving trip segment to charge the vehicle. Compared to this, in embodiments of the present disclosure, when the parking trip segment exists, the stationary charging mode can be assigned. The vehicle can be charged during parking, which saves time for the user. The driving charging mode can be assigned corresponding to the driving trip segment. Compared to adding a parking charging trip segment in the driving trip segment in the existing technology, no parking charging trip segment is added, which saves time for the user.

In some embodiments, the charging module 60 can be further configured to, when the current trip segment is the driving trip segment and the next trip segment is the parking trip segment, and if the estimated remaining electric power is larger than the first threshold, determine to provide the stationary charging service in the next trip segment.

In some embodiments, the charging module 60 can be further configured to, when the current trip segment is the parking trip segment and the next trip segment is the driving trip segment, and if the estimated remaining electric power is smaller than the second threshold, determine to provide the stationary charging service in the current trip segment.

In a third aspect, the vehicle of embodiments of the present disclosure is described. The vehicle of embodiments of the present disclosure can include any vehicle charging device described above.

In embodiments of the present disclosure, the overall trip information can be classified into the stationary trip segment and the driving trip segment. The stationary trip segment can correspond to the stationary charging mode, and the driving trip segment can correspond to the driving charging mode. That is, different charging modes can be assigned according to different trip segments. However, in the existing technology, only the driving trip segment is considered, and the parking charging trip segment can be added to the driving trip segment to charge the vehicle. Compared to this, in embodiments of the present disclosure, when the parking trip segment exists, the stationary charging mode can be assigned. The vehicle can be charged during parking, which saves time for the user. The driving charging mode can be assigned corresponding to the driving trip segment. Compared to adding a parking charging trip segment in the driving trip segment in the existing technology, no parking charging trip segment is added, which saves time for the user.

Embodiments of the present disclosure are described in a progressive manner, each embodiment focuses on the difference from other embodiments, and the same and similar parts of embodiments can be referred to each other.

Those skilled in the art should understand that embodiments of the present disclosure can be provided as methods and devices. Thus, the present disclosure can be implemented by hardware, software, or a combination thereof. Furthermore, the present disclosure may take the form of a computer program product implemented on one or more computer-usable storage media (including but not limited to disk storage, CD-ROM, optical storage, etc.) including computer-usable program codes.

The present disclosure is described with reference to flowchart and/or block diagrams of methods, terminal apparatuses (systems), and computer program products of the present disclosure. Each process and/or block of the flowchart and/or block diagram, and a combination of the process and/or block in the flowchart and/or block diagram can be implemented by computer program instructions. These computer program instructions can be provided to a general-purpose computer, special-purpose computer, embedded processor, or processor of another programmable data processing terminal apparatus to produce a machine. Thus, instructions executed by the computer or processor of another programmable data processing terminal apparatus can produce a device configured to implement the functions specified in one or more processes of the flowchart and/or one or more blocks of the block diagram.

These computer program instructions can also be stored in a computer-readable memory capable of guiding the computer or the other programmable data processing terminal to operate in a specific manner. Thus, the instructions stored in the computer-readable memory can produce a product including the instruction device. The instruction device can be configured to implement the functions specified in one or more processes of the flowchart and/or one or more blocks of the block diagram.

These computer program instructions can also be loaded into the computer or the other programmable data processing terminal apparatus. Thus, a series of operational steps can be performed on the computer or the other programmable terminal apparatus to produce computer-implemented processing. Therefore, the instructions executed on the computer or the other programmable terminal apparatus can be used to provide the steps used to implement the functions specified in one or more processes of the flowchart and/or one or more blocks of the block diagram.

Although embodiments of the present disclosure are described, those skilled in the art can make modifications and changes to these embodiments of the present disclosure once knowing the basic creative principle. Thus, the appended claims include embodiments of the present disclosure and all the modifications and changes within the scope of the present disclosure.

In the present disclosure, relational terms such as first and second are only used to distinguish one entity or operation from another entity or operation and do not necessarily require or imply that these entities or operations have such actual relationship or order. Furthermore, the term "comprise," "include," or any other variation thereof is intended to cover a non-exclusive inclusion. Thus, a process, method, article, or terminal apparatus comprising a set of elements includes not only those elements, but also includes elements not expressly listed, or includes the elements inherent to such the process, method, article, or terminal apparatus. When there is no further limitation, an element defined by the phrase "comprising a ..." does not exclude the presence of additional identical elements in the process, method, article, or terminal apparatus comprising the element.

A vehicle charging method, device, and vehicle of the present disclosure are described in detail above. In the specification, the principle and implementation of the present disclosure are described exemplarily. The description of the above embodiments is only used to help understand the method and core idea of the present disclosure. Meanwhile, for those of ordinary skill in the art, according to the idea of the present disclosure, changes can be made to the specific implementation and application scope. In summary, the content of the specification cannot be understood to limit the present disclosure.

## Claims

1. A vehicle charging method comprising:
obtaining overall trip information of a vehicle, the overall trip information including at least one trip segment;
assigning a charging strategy to each trip segment, wherein:
in response to existence of a driving trip segment, a driving charging mode is assigned corresponding to the driving trip segment; and
in response to existence of a parking trip segment, a stationary charging mode is assigned corresponding to the parking trip segment;
according to the trip segment and a corresponding charging mode, performing a charging service on the vehicle during a trip of the vehicle.

2. The vehicle charging method of claim 1, wherein according to the trip segment and the corresponding charging mode, performing the charging service on the vehicle during the trip of the vehicle includes:
obtaining current remaining electric power of the vehicle;
in the driving trip segment, obtaining a distance of the trip segment and estimating estimated remaining electric power when the driving trip segment ends according to the current remaining electric power of the vehicle;
in the parking trip segment, obtaining a distance of a next trip segment that is a driving trip segment, and estimating estimated remaining electric power when the next driving trip segment ends according to the current remaining electric power of the vehicle; and
according to the estimated remaining electric power, determining to provide a charging service according to the corresponding charging mode in the current trip segment.

3. The method of claim 2, wherein according to the estimated remaining electric power, determining to provide the charging service according to the corresponding charging mode in the current trip segment includes:
when the current trip segment is the driving trip segment and the next trip segment is the parking trip segment, in response to the estimated remaining electric power being greater than a first threshold, determining to provide a stationary charging service in the next trip segment.

4. The method of claim 2, wherein according to the estimated remaining electric power, determining to provide the charging service according to the corresponding charging mode in the current trip segment includes:
when the current trip segment is the parking trip segment and the next trip segment is the driving trip segment, in response to the estimated remaining electric power being less than a second threshold, determining to provide a stationary charging service in the current trip segment.

5. The method of claim 1, further comprising:
in response to the charging strategy of requiring charging, prompting the charging strategy, wherein the charging strategy of requiring charging includes at least one of a driving charging mode or a stationary charging mode.

6. The method of claim 1, wherein obtaining the overall trip information of the vehicle includes:
receiving the overall trip information sent by a vehicle-carried terminal or a mobile terminal.

7. The method of claim 6, further comprising, in response to a first data format of the overall trip information is different from a predetermined second data format:
parsing the overall trip information in the first data format to obtain the overall trip information in the second data format.

8. A vehicle charging device comprising:
an acquisition module configured to obtain overall trip information of a vehicle, the overall trip information including at least one trip segment;
a calculation module configured to assign a charging strategy to each trip segment, wherein:
in response to existence of a trip segment, a driving charging mode is assigned corresponding to the trip segment; and
in response to existence of a stationary trip segment, a stationary charging mode is assigned corresponding to the stationary trip segment; and
a charging module configured to obtain current remaining electric power of the vehicle, obtain a distance of the trip segment in the driving trip segment and estimate estimated remaining electric power when the driving trip segment ends according to the current remaining electric power of the vehicle, obtain a distance of a next trip segment in the stationary trip segment and estimate estimated remaining electric power when the next driving trip ends according to the current remaining electric power of the vehicle, and determine to provide a charging service according to a corresponding charging mode in the current trip segment.

9. The device of claim 8, wherein the charging module is further configured to:
when the current trip segment is the driving trip segment and the next trip segment is a parking trip segment, in response to the estimated remaining electric power being greater than a first threshold, determining to provide a stationary charging service in the next trip segment.

10. The device of claim 8, wherein the charging module is further configured to:
when the current trip is a parking trip and the next trip is the driving trip, in response to the estimated remaining electric power being less than a second threshold, determining to provide a stationary charging service in the current trip segment.

11. The device of claim 8, further comprising:
a prompt module configured to prompt the charging strategy in response to the charging strategy of requiring charging, wherein the charging strategy of requiring charging includes at least one of the driving charging mode or the stationary charging mode.

12. The device of claim 8, wherein the acquisition module includes:
an acquisition submodule configured to receive the overall trip information sent by a vehicle-carried terminal or a mobile terminal.

13. The device of claim 8, further comprising:
a parsing module configured to, in response to a first data format of the overall trip information is different from a predetermined second data format, parse the overall trip information in the first data format to obtain the overall trip information in the second data format.

14. A vehicle comprising a vehicle charging device including:
an acquisition module configured to obtain overall trip information of a vehicle, the overall trip information including at least one trip segment;
a calculation module configured to assign a charging strategy to each trip segment, wherein:
in response to existence of a trip segment, a driving charging mode is assigned corresponding to the trip segment; and
in response to existence of a stationary trip segment, a stationary charging mode is assigned corresponding to the stationary trip segment; and
a charging module configured to obtain current remaining electric power of the vehicle, obtain a distance of the trip segment in the driving trip segment and estimate estimated remaining electric power when the driving trip segment ends according to the current remaining electric power of the vehicle, obtain a distance of a next trip segment in the stationary trip segment and estimate estimated remaining electric power when the next driving trip ends according to the current remaining electric power of the vehicle, and determine to provide a charging service according to a corresponding charging mode in the current trip segment.

15. The vehicle of claim 14, wherein the charging module is further configured to:
when the current trip segment is the driving trip segment and the next trip segment is a parking trip segment, in response to the estimated remaining electric power being greater than a first threshold, determining to provide a stationary charging service in the next trip segment.

16. The vehicle of claim 14, wherein the charging module is further configured to:
when the current trip is a parking trip and the next trip is the driving trip, in response to the estimated remaining electric power being less than a second threshold, determining to provide a stationary charging service in the current trip segment.

17. The vehicle of claim 14, wherein the vehicle charging device further includes:
a prompt module configured to prompt the charging strategy in response to the charging strategy of requiring charging, wherein the charging strategy of requiring charging includes at least one of the driving charging mode or the stationary charging mode.

18. The vehicle of claim 14, wherein the acquisition module includes:
an acquisition submodule configured to receive the overall trip information sent by a vehicle-carried terminal or a mobile terminal.

19. The vehicle of claim 14, wherein the vehicle charging device further includes:
a parsing module configured to, in response to a first data format of the overall trip information is different from a predetermined second data format, parse the overall trip information in the first data format to obtain the overall trip information in the second data format.
